# EUROPÄISCHE PATENTSCHRIFT

(11) **EP 3 409 150 B1**
(45) Veröffentlichungstag und Bekanntmachung des Hinweises auf die Patenterteilung: **26.02.2020**
(21) Anmeldenummer: 18170488.3
(22) Anmeldetag: 03.05.2018
(51) Int. Cl.: A47J 31/44, B67D 1/12

(54) **GETRÄNKEBEREITER, INSBESONDERE KAFFEEVOLLAUTOMAT**
BEVERAGE PREPARATION DEVICE, IN PARTICULAR A FULLY AUTOMATIC COFFEE MAKER
DISPOSITIF DE PRÉPARATION DE BOISSON, EN PARTICULIER MACHINE À CAFÉ ENTIÈREMENT AUTOMATIQUE

(30) Priorität: 30.05.2017 DE 102017209055
(43) Veröffentlichungstag der Anmeldung: 05.12.2018
(73) Patentinhaber: BSH Hausgeräte GmbH, 81739 München (DE)
(72) Erfinder: Wrehde, Stefan, 83365 Nußdorf (DE); Mathes, Anton, 83364 Neukirchen am Teisenberg (DE); Tracy, Timothy Mark, 83361 Kienberg (DE); Beck, Rudolf, 84518 Garching a. d. Alz (DE)

(56) Entgegenhaltungen:
- EP-A1- 1 647 951
- EP-A1- 1 745 726
- EP-A1- 2 993 448
- EP-A1- 3 050 471
- WO-A1-2006/063645
- WO-A1-2014/169447
- US-A1- 2013 228 250

## Beschreibung

Die Erfindung betrifft einen Getränkebereiter, insbesondere einen Kaffeevollautomaten.

Moderne Getränkebereiter wie etwa Kaffeevollautomaten besitzen typischerweise einen Getränkeauslass zur Ausgabe des vom Getränkebereiter zubereiteten Getränks sowie eine Behältnis-Aufnahme, in welcher das mit dem ausgegebenen Getränk zu befüllende Behältnis - beispielsweise eine Tasse oder einen Becher - während des Befüll-Vorgangs platziert werden kann. Nach dem Platzieren des Behältnisses in der Behältnis-Aufnahme durch den Benutzer des Getränkebereiters erfolgt der Befüll-Vorgang üblicherweise vollautomatisch. Um Fehlbedienungen durch den Benutzer, insbesondere beim Platzieren des Behältnisses in der Behältnis-Aufnahme zu vermeiden, ist es von Vorteil, wenn dem Getränkebereiter möglichst viele Parameter betreffend das in der Behältnis-Aufnahme angeordnete Behältnis zur Verfügung stehen.

Die Druckschrift EP 2 993 448 A1 beschreibt beispielsweise einen Getränkespender mit Füllstandsermittlung, die einen Sender in einem Getränkeauslass umfasst, der eine Gerade in Richtung der Behältnis-Aufnahme projiziert, sowie einen beabstandet vom Sender unter einem Winkel angeordneten Empfänger. Aus der WO 2006/063645 A1 ist zudem ein Getränkebereiter mit vollautomatisch erfolgendem Befüll-Vorgang bekannt, bei dem ein Sender einen Lichtpunkt in ein Behältnis projiziert, dessen Position von einem Erfassungsmittel erfasst wird.

Es ist eine Aufgabe der vorliegenden Erfindung, bei der Entwicklung von Getränkebereitern neue Wege aufzuzeigen. Dies gilt insbesondere hinsichtlich einer verbesserten Erkennung von Parametern betreffend das im Getränkebereiter aufgenommene und zu befüllende Behältnis.

Grundidee der Erfindung ist demnach, das im Getränkebereiter aufgenommene Behältnis, also insbesondere eine Tasse oder einen Becher, während des Befüll-Vorgangs mittels eines Laserscanners - im Folgenden auch als "Lasermodul" bezeichnet - abzutasten und auf diese Weise verschiedene Parameter betreffend das Behältnis wie etwa dessen Position im bzw. am Getränkebereiter die äußeren Abmessungen sowie den aktuellen Befüll-Zustand des Behältnisses zu ermitteln.

Der Laserscanner bzw. das Lasermodul dient dabei zur Entfernungsmessung, d.h. es erlaubt die Bestimmung des Abstands des Lasermoduls zu einem bestimmten Objekt wie etwa besagtem Behältnis. Hierzu wird vom Lasermodul Laserstrahlung erzeugt und über einen Laserauslass emittiert. Das Lasermodul mit dem Laserauslass wird dabei auf das Behältnis gerichtet, so dass die emittierte Laserstrahlung auf das Behältnis trifft und von diesem zumindest teilweise reflektiert wird. Mittels Detektion der reflektierten Laserstrahlung durch einen im Lasermodul vorhandenen Detektor für Laserstrahlung lässt sich der Abstand zum Behältnis ermitteln. Durch Wellenlängen-Modulation in der emittierten Laserstrahlung und Überlagerung von emittierter und reflektierten Laserstrahlung kann die optische Weglänge und somit der Abstand der Laserquelle, also des Lasermoduls, und des die Laserstrahlung reflektierenden Behältnisses bestimmt werden. Auf Grundlage einer solchen Entfernungsbestimmung lassen sich wiederum Parameter betreffend das reflektierende Behältnis ermitteln.

Ein erfindungsgemäßer Getränkebereiter, insbesondere ein Kaffeevollautomat, umfasst einen Getränkeauslass zur Ausgabe des vom Getränkebereiter zubereiteten Getränks in ein Behältnis, insbesondere in eine Tasse oder in einen Becher. Der Getränkebereiter umfasst ferner eine Behältnis-Aufnahme zum Aufnehmen des Behältnisses, während dieses mit dem Getränk aus dem Getränkeauslass befüllt wird. Die Behältnis-Aufnahme kann vorzugsweise als einfache Aufnahmeplatte, als Aufnahmeschale oder als Halter ausgebildet sein. Erfindungsgemäß umfasst der Getränkebereiter ein Lasermodul, mittels welchem durch Detektion und Auswertung der am Behältnis reflektierten Laserstrahlung zumindest ein Parameter betreffend das in der Behältnis-Aufnahme angeordnete Behältnis bestimmt werden kann. Das Lasermodul ist zur Erzeugung von Laserstrahlung mit einem zweidimensionalen Strahlprofil um eine vorbestimmte Drehachse drehbar ausgebildet. Alternativ umfasst der Getränkebereiter zur Erzeugung von Laserstrahlung mit einem zweidimensionalen Strahlprofil einen um eine vorbestimmte Drehachse drehbar ausgebildeten Reflektor zum Reflektieren der vom Lasermodul emittierten Laserstrahlung.

Vorzugsweise ist der zumindest eine Parameter, welcher mit Hilfe des Lasermoduls ermittelt werden kann, ein die geometrische Formgebung des Behältnisses beschreibender Parameter. Auf diese Weise lässt sich beispielsweise ermitteln, welcher Behältnis-Typ - etwa eine Tasse oder ein Becher - verwendet wird. Auch sind Rückschlüsse auf die Größe des Behältnisses und somit des mit dem Getränk befüllbaren Volumens möglich.

Bei einer vorteilhaften Weiterbildung der Erfindung kann der zumindest eine, das Behältnis betreffende Parameter die Höhe des Behältnisses sowie, alternativ oder zusätzlich, der Durchmesser des Behältnisses sein.

Gemäß einer weiteren bevorzugten Ausführungsform ist der zumindest eine Parameter eine Bodenhöhe des Behältnis-Bodens des Behältnisses.

Gemäß einer weiteren bevorzugten Ausführungsform ist der zumindest eine Parameter ein Füllstand des mit dem Getränk aus dem Getränkebereiter befüllten Behältnisses.

Gemäß einer weiteren bevorzugten Ausführungsform ist der zumindest eine Parameter die Position des Behältnisses relativ zum Getränkebereiter, insbesondere relativ zum Getränkeauslass, wenn es in der Behältnis-Aufnahme aufgenommen ist.

Zweckmäßig umfasst das zumindest eine Lasermodul einen Laserauslass zum Emittieren von Laserstrahlen entlang einer vorbestimmten Strahlrichtung und einen Detektor zum Detektieren der emittierten Laserstrahlen, wobei das Lasermodul zur Entfernungsmessung eingerichtet ist. Dies bedeutet, dass das Lasermodul derart ausgebildet ist, dass es durch Detektion der Laserstrahlung, die von dem im Abstand zum Lasermodul angeordneten Behältnis reflektiert wird, den Abstand des Lasermoduls zum Behältnis bestimmten kann.

Bei einer erfindungsgemäßen Alternative ist das Lasermodul zur Erzeugung eines zweidimensionalen Strahlprofils um eine vorbestimmte Drehachse drehbar ausgebildet. Durch ein Hin- und Her-Bewegen des Lasermoduls kann somit auf einfache Weise Laserstrahlung mit einem zweidimensionalen Strahlprofil in Form einer Strahlebene erzeugt werden.

Besonders zweckmäßig kann das zumindest eine Lasermodul translatorisch ortsfest und um die vorbestimmte Drehachse drehbar mit dem Gehäuse verbunden sein. Einerseits wird auf diese Weise die zur Erzeugung eines zweidimensionalen Strahlprofils erforderliche Drehbarkeit des Lasermoduls relativ zum Gehäuse gewährleistet; andererseits wird das Lasermodul aber auch mechanisch stabil am Getränkebereiter fixiert.

Bei einer anderen erfindungsgemäßen Alternative umfasst der Getränkebereiter zur Erzeugung des zweidimensionalen Strahlprofils einen um eine vorbestimmte Drehachse drehbar ausgebildeten Reflektor zum Reflektieren der vom Lasermodul emittierten Laserstrahlung.

Besonders bevorzugt kann der Reflektor als Spiegel ausgebildet sein, der mit einem piezoelektrischen Antrieb antriebsverbunden ist. Dies erlaubt ein präzises Verstellen des Spiegels um die Drehachse, wobei für den Antrieb nur wenig Bauraum benötigt wird.

Bevorzugt kann der Getränkeauslass relativ zur Behältnis-Aufnahme höhenverstellbar ausgebildet sein. Bei dieser Variante kann das zumindest eine Lasermodul translatorisch ortsfest und um die vorbestimmte Drehachse drehbar mit dem Getränkeauslass verbunden sein. Dies ermöglicht eine Positionierung des Lasermoduls in unmittelbarer Nähe des Behältnisses. Somit kann die Position des Behältnisses in der Behältnis-Aufnahme vom Lasermodul besonders genau ermittelt werden.

Bei einer weiteren vorteilhaften Weiterbildung sind ein erstes und zumindest ein zweites Lasermodul vorgesehen. Bei dieser Weiterbildung ist das erste Lasermodul relativ zum zumindest einen zweiten Lasermodul translatorisch verstellbar ausgebildet. Durch die Verstellbarkeit der zumindest zwei Lasermodule relativ zueinander ist es gegenüber einer Ausführungsform mit nur einem Lasermodul möglich, eine erhöhte Anzahl von Parametern betreffend das im Getränkebereiter aufgenommenen Behältnisses zu bestimmen.

Bei einer weiteren vorteilhaften Weiterbildung des Getränkebereiters kann das zumindest eine Lasermodul entlang einer Vertikalrichtung des Gehäuses oberhalb der Behältnis-Aufnahme und oder oberhalb des Getränkeauslasses am Gehäuse angeordnet sein. Auf diese Weise kann die Position des Behältnisses in der Behältnis-Aufnahme vom Lasermodul besonders präzise erfasst werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: in schematischer, stark vereinfachter Darstellung ein Beispiel eines erfindungsgemäßen Getränkebereiters,
- Fig. 2: eine erste Realisierungsvariante des Getränkebereiters, bei welcher ein zweidimensionales Strahlprofil der Laserstrahlung mit Hilfe einer drehbaren Lagerung des Lasermoduls erreicht werden kann,
- Fig. 3: eine zweite Realisierungsvariante des Getränkebereiters, bei welcher ein zweidimensionales Strahlprofil der Laserstrahlung mit Hilfe eines relativ zum Lasermodul drehbaren Lagerung eines Reflektors erreicht werden kann,
- Fig. 4: das vom Getränkebereiter zu befüllende und mittels des Lasermoduls zu analysierende Behältnis in separater Darstellung.

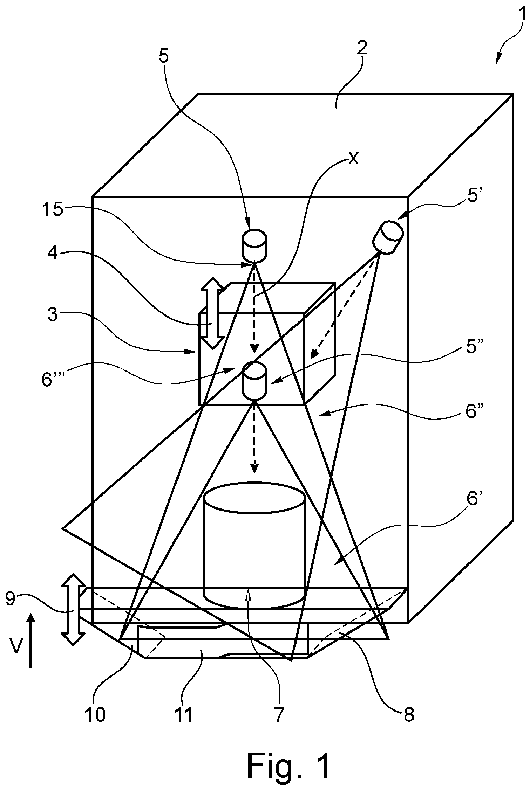

Die Figur 1 illustriert in schematischer, stark vereinfachter Darstellung ein Beispiel eines erfindungsgemäßen Getränkebereiters 1, der beispielsweise als Kaffeevollautomat ausgebildet sein kann. Der Getränkebereiter 1 kann ein in Figur 1 nur schematisch angedeutetes Gehäuse 2 aufweisen.

Für den Fall, dass der Getränkebereiter 1 als Kaffeevollautomat realisiert ist, kann im Gehäuse 2 eine in Figur 1 nicht näher dargestellte Brühkammer zum Zubereiten von heißem Kaffee vorhanden sein. Der Getränkebereiter 1 umfasst einen Getränkeauslass 3 zur Ausgabe des vom Getränkebereiter 1 zubereiteten Getränks 12 in ein Behältnis 7. Das Behältnis 7 kann beispielsweise eine Tasse oder ein Becher sein. Der Getränkebereiter 1 weist eine Behältnis-Aufnahme 8 zum Aufnehmen des Behältnisses 7 auf, während es im Zuge des Befüll-Vorgangs mit dem vom Getränkebereiter 1 zubereiteten und über den Getränkeauslass 3 ausgegebenen Getränk 12 befüllt wird. Die Behältnis-Aufnahme 8 kann beispielsweise als Platte, als Schale oder als Halter ausgebildet sein. Unterhalb der Behältnis-Aufnahme 8 kann eine Abwasserschale 10 zum Aufnehmen von Abwasser 11 vorgesehen sein.

Außerdem umfasst der Getränkebereiter 1 ein Lasermodul 5, dessen Funktionsweise jener eines eingangs beschriebenen Laserscanners entspricht. Das Lasermodul 5 erzeugt Laserstrahlung 6, welche entlang einer Strahlrichtung x über einen Laserauslass 15 aus dem Lasermodul 5 austreten kann. Das Lasermodul 5 umfasst auch einen in den Figuren nicht näher dargestellten Detektor zum Detektieren der vom Lasermodul 5 emittierten Laserstrahlung 6.

Das Lasermodul 5 ist für die Entfernungsmessung eingerichtet. Dies geschieht durch Auswertung der vom Laserauslass 15 emittierten und durch Reflexion am Behältnis 7 in den Detektor des Lasermoduls 5 reflektierten Laserstrahlung 6.

Durch Auswertung der vom Behältnis 7 reflektierten und vom Detektor des Lasermoduls 5 detektierten Laserstrahlung 6 unter Verwendung einer in den Figuren nicht dargestellten Auswertungseinrichtung lassen sich verschiedene Parameter betreffend das in der Behältnis-Aufnahme 8 angeordnete Behältnis 7 ermitteln. Beispielsweise können Parameter des Behältnisses 7, welche dessen geometrische Formgebung definieren, bestimmt werden. Hierzu ist es erforderlich, den vom Lasermodul 5 emittierten Laserstrahl 6 aufzuweiten und ein zweidimensionales Strahlprofil zu erzeugen.

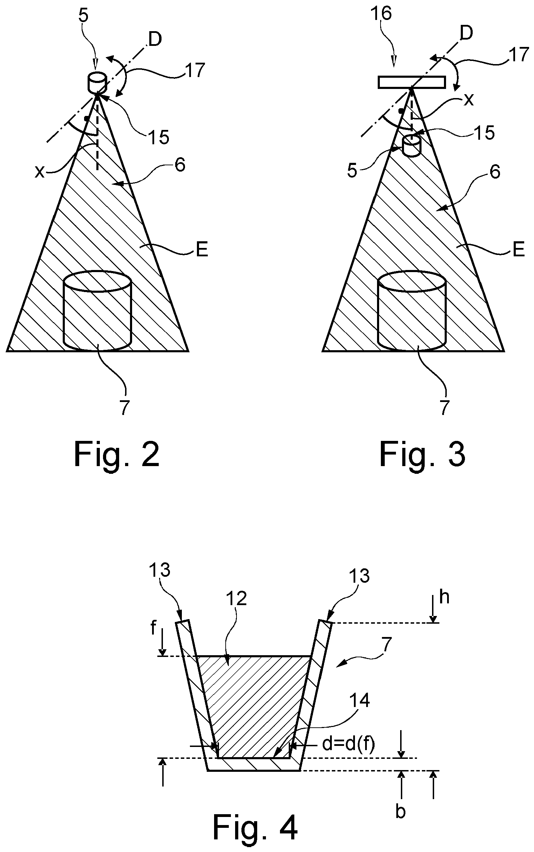

Zur Erzeugung von Laserstrahlung 6 mit einem zweidimensionalen Strahlprofil ist das Lasermodul 5 um eine vorbestimmte Drehachse D drehbar ausgebildet. Dieses Szenario ist zur Verdeutlichung in Figur 2 in separater Darstellung gezeigt. Demnach wird die Laserstrahlung 6 entlang einer vorbestimmten Strahlrichtung x aus dem Laserauslass 15 des Lasermoduls 5 emittiert, welche sich senkrecht einer Drehachse D des Lasermoduls 5 erstreckt. Eine Hin- und Her-Bewegung des Lasermoduls 5 um die Drehachse D - in Figur 2 schematisch angedeutet durch einen mit dem Bezugszeichen 17 bezeichneten Doppelpfeil - führt dazu, dass Laserstrahlung 6 mit einem zweidimensionalen Strahlprofil erzeugt wird, welches sich in einer Strahlebene E erstreckt.

Durch geeignete Ausrichtung der Strahlebene E derart, dass das Behältnis 7 die Strahlebene E schneidet und/oder in der Strahlebene E liegt, wird die Laserstrahlung 6 zumindest teilweise am Behältnis 7 reflektiert, so dass sie vom Detektor des Lasermoduls 5 detektiert und ausgewertet werden kann. Auf diese Weise lassen sich die bereits genannten geometrische Eigenschaften des Behältnisses 7 ermitteln, was im Folgenden anhand der Darstellung der Figur 4 näher erläutert werden soll, welche das in der Behältnis-Aufnahme 8 aufgenommene Behältnis 7 in separater Darstellung zeigt.

So kann durch Auswertung der am Behältnis 7 reflektierten Laserstrahlung eine Höhe h der Behältnis-Wand 13 des Behältnisses 7 sowie der Durchmesser d des Behältnisses 7 bestimmt werden. Weiterhin ist auch eine Ermittlung des Füllstandes f des mit dem Getränk 12 befüllten Behältnisses 7 möglich. Auch eine Bestimmung des Durchmessers d als Funktion der Höhe ist denkbar. Schließlich kann auch eine Bodenhöhe b des Behältnis-Bodens 14 des Behältnisses bestimmt werden.

Betrachtet man nun wieder Figur 1, so erkennt man, dass das Lasermodul 5 entlang einer Vertikalrichtung V des Gehäuses 2 oberhalb sowohl des Getränkeauslasses 3 als auch der Behältnis-Aufnahme 8 angeordnet ist. Der Getränkeauslass 3 ist dabei relativ zur Behältnis-Aufnahme 8 entlang der Vertikalrichtung V höhenverstellbar ausgebildet. Hierzu kann der Getränkeauslass 3 relativ zum Gehäuse 2 höhenverstellbar sein, was in Figur 1 durch einen Doppelpfeil mit dem Bezugszeichen 4 angedeutet wird. Alternativ oder zusätzlich kann auch die Behältnis-Aufnahme 8 relativ zum Gehäuse 2 höhenverstellbar sein, was in Figur 1 durch einen Doppelpfeil mit dem Bezugszeichen 9 angedeutet wird. Das Lasermodul 5 ist hierbei translatorisch ortsfest und um die vorbestimmte Drehachse D drehbar mit dem Gehäuse 2 verbunden. Die Drehbarkeit des Lasermoduls 5 relativ zum Gehäuse 2 kann beispielsweise mittels einer drehbar am Gehäuse 2 gelagerten Welle (nicht gezeigt) erfolgen, an welcher das Lasermodul 5 drehfest angebracht ist. Dem einschlägigen Fachmann sind aber auch andere konstruktive Realisierungsmöglichkeiten bekannt.

In einer Variante des Beispiels kann das Lasermodul 5 auch an einer anderen geeigneten Position am Gehäuse 2 angeordnet sein. Denkbar ist insbesondere eine Anordnung oberhalb des Getränkeauslasses 3 und oberhalb der Behältnis-Aufnahme 8, jedoch bezüglich der Vertikalrichtung V seitlich versetzt zur Behältnis-Aufnahme 8 und dem Behältnis 7.

Ein an einer solchen Stelle positioniertes Lasermodul ist in Figur 1 mit dem Bezugszeichen 5' bezeichnet. Möglich ist auch eine simultane Bereitstellung sowohl des Lasermoduls 5 als auch des Lasermoduls 5', also gleich zweier Lasermodule.

Mit Hilfe eines Lasermoduls 5. 5' kann bei geeigneter Anordnung am Gehäuse 2 auch die Position des Behältnisses 7 relativ zum Getränkebereiter 1 bzw. dessen Gehäuses 2 bestimmt werden. Insbesondere ist eine Positionsbestimmung der Behältnisses 7 relativ zum Getränkeauslass 3 möglich, wenn sich dieses auf der höhenverstellbaren Behältnis-Aufnahme 8 angeordnet befindet. Des Weiteren kann wie in Figur 1 gezeigt ein drittes Lasermodul 5" translatorisch ortsfest und um die vorbestimmte Drehachse R drehbar mit dem höhenverstellbaren Getränkeauslass 3 verbunden sein. Das dritte Lasermodul 5" ist in diesem Szenario relativ den beiden Lasermodulen 5, 5' translatorisch verstellbar ausgebildet.

Zur Erzeugung von Laserstrahlung 6 mit einem in einer Strahlebene E liegenden, zweidimensionalen Strahlprofil kann anstelle eines drehbaren Lasermoduls 5 auch ein dazu alternativer Aufbau verwendet werden, der in Figur 3 grobschematisch dargestellt ist. Bei dieser Variante ist das Lasermodul 5 ortsfest am Gehäuse 2 (in Figur 3 nicht gezeigt) angebracht. Zur Erzeugung von Laserstrahlung 6 mit einem zweidimensionalen Strahlprofil ist gemäß Figur 3 ein um die vorbestimmte Drehachse D drehbar ausgebildeter Reflektor 16, an welchem die vom Lasermodul 5 emittierten Laserstrahlung 6 reflektiert wird.

Gegenüber dem Beispiel der Figur 2 erfolgt also die zweidimensionale Aufweitung der vom Lasermodul 5 entlang der Strahlrichtung x emittierten Laserstrahlung 6 in die Strahlebene E mit Hilfe des Reflektors 16. Hierzu wird der Reflektor 16, der als Spiegel mit reflektierender Spiegeloberfläche ausgebildet sein kann, in analoger Weise zum Lasermodul 5 gemäß Figur 2 um die Drehachse D hin- und her bewegt. Nach der Reflexion am Reflektor 16 trifft die Laserstrahlung 6 in analoger Weise zum Beispiel der Figur 2 auf das Behältnis 7 und wird dort erneut reflektiert. Die am Behältnis 7 reflektierte Laserstrahlung 6 gelangt in analoger Weise zum Beispiel der Figur 2 über den Reflektor 16 in den Detektor des Lasermoduls 5. Der Reflektor 16 kann auch im Beispiel der Figur 3 analog zum Beispiel der Figur 2 drehfest an einer Welle angebracht sein, die drehbar am Gehäuse 2 gelagert ist (in den Figuren nicht gezeigt).

Die Drehbewegung des Lasermoduls 5 gemäß Figur 2 sowie des Reflektors 16 bzw. des Spiegels gemäß Figur 3 kann mit Hilfe eines piezoelektrischen Antriebs (nicht gezeigt) erzeugt werden.

Für einen mit dem vorangehend erläuterten Lasermodul 5 ausgestatteten Getränkebereiter 1 ergeben sich vielfältige Anwendungsfelder.

Durch Drehung des Lasermoduls 5 oder des Reflektors 16 relativ zur Strahlebene E der Laserstrahlung 6 um die Drehachse D - oder umgekehrt des Behältnisses 7 relativ zum Lasermodul 5 bzw. zum Reflektor 16 - lassen sich echte dreidimensionale Entfernungsdaten bzw. Konturen ermitteln. Dies macht es möglich, den Füllstand f im Behältnis 7 zu ermitteln.

Das Lasermodul 5 kann auch dazu verwendet werden, einen Abstand zwischen dem Getränkeauslass 3 und der Behältnis-Aufnahme 8 zu bestimmen. Dies bietet sich insbesondere an, wenn das Lasermodul 5 fest mit dem Getränkeauslass 3 verbunden ist und beide Komponenten gegenüber der Behältnis-Aufnahme 8 höhenverstellbar ausgebildet sind. Somit lässt sich vom Lasermodul 5 die Höhe des Getränkeauslasses 3 über dem Behältnis 7 gegebenenfalls automatisch anpassen. Denkbar ist es auch, anstelle des Getränkeauslasses 3 mit dem Lasermodul 5 die Behältnis-Aufnahme 8 höhenverstellbar auszubilden. Denkbar ist es außerdem, mithilfe des Lasermoduls 5 das Behältnis 7 lateral exakt unter dem Getränkeauslass 3 zu positionieren und im Extremfall sogar unter diesem zu zentrieren.

Mittels des Lasermoduls 5 kann auch erkannt werden, ob verschiedene Komponenten wie beispielsweise die Behältnis-Aufnahme 8 oder die Abwasserschale 10 im Getränkebereiter 1 montiert sind oder aus diesem entfernt wurden, etwa um die Abwasserschale 10 zu leeren.

Außerdem kann das Lasermodul 5 auch dazu verwendet werden, nicht nur die Füllhöhe f des Getränks 12 im Behältnis 7, sondern auch eine Füllhöhe des Abwassers 11 in der Abwasserschale 10 zu ermitteln. Bevorzugt kann beides in Echtzeit geschehen. Anstelle des Abwassers 11 kann vom Lasermodul 5 auch ein etwaiger in der Abwasserschale 10 vorgesehene Schwimmkörper erfasst werden. Auf diese Weise ist eine indirekte, gleichwohl besonders zuverlässige Erkennung des Füllstands des Abwassers 11 in der Abwasserschale 10 möglich. Diese Variante bietet sich insbesondere dann an, wenn die optische Transparenz des Abwassers 11 für die vom Lasermodul 5 emittierte Laserstrahlung 6 so groß ist, dass nicht genügend Laserstrahlung 6 vom Abwasser 11 reflektiert wird, um eine präzise Entfernungsbestimmung zu gewährleisten.

Mithilfe des Lasermoduls 5 kann auch ein Anordnen des Behältnisses 7 auf der Behältnis-Aufnahme 8 durch den Benutzer des Getränkebereiches 1 detektiert werden. Somit kann der Befüll-Vorgang zum Befüllen des Behältnisses 7 mit dem Getränk 12 ausgelöst werden. Insbesondere kann verhindert werden, dass der Befüll-Vorgang gestartet wird, bevor das Behältnis 7 unterhalb des Getränkeauslasses3 bzw. auf der Behältnis-Aufnahme 8 auch positioniert wird. Ebenso ist es vorstellbar, dass ein Entfernen des Behältnisses 7 erkannt wird, so dass der Befüll-Vorgang gegebenenfalls gestoppt werden kann. In einer weiteren Variante kann mittels des Lasermoduls 5 eine automatische Positionierung des Getränkeauslasses 3 und der Abwasserschale 10 erfolgen. Insbesondere ist es denkbar, den Abstand zwischen dem Getränkeauslass 3 über der Abwasserschale 10 mithilfe des Lasermoduls 5 auf einen vorbestimmten Sollwert zu justieren. Ebenfalls kann mithilfe des Lasermoduls 5 eine laterale Positionierung des Getränkeauslasses 3 bzw. der Behältnis-Aufnahme 8 überwacht werden. Auf diese Weise können unerwünschte Flüssigkeitsspritzer und an dem Behältnis 7 vorbeiströmende Flüssigkeitsanteile weitgehend oder sogar vollständig vermieden werden.

Ferner können mithilfe des Lasermoduls 5 auch eine Reihe von neuartigen Funktionen zur Verbesserung des Benutzer-Erlebnisses und zur Erhöhung der Betriebssicherheit in den Getränkebereiter 1 integriert werden. Unterhalb des Getränkeauslasses 3 angeordnete Behältnisse 7, zum Beispiel Tassen oder Gläser, können mithilfe des Lasermoduls 5 automatisch sicher erkannt und auch unterschieden werden. Beim Anordnen ungeeigneter Behältnisse 7 kann auf diese Weise der Befüll-Vorgang gestoppt oder gar nicht erst gestartet werden. Ähnliches kann erfolgen, wenn beispielsweise eine Hand des Benutzers unterhalb des Getränkeauslasses 3 erkannt wird. Auch in diesem Fall kann der Befüll-Vorgang gestoppt oder zumindest unterbrochen werden. Auf diese Weise wird verhindert, dass die Hand des Benutzers in Kontakt mit Flüssigkeit hoher Temperatur gelangt, was zu Handverletzungen führen könnte.

Da der Füllstand f des Behältnisses 7 in Echtzeit erkannt wird, kann ein zu erzielender Soll-Füllstand automatisch an Behältnisse 7 mit unterschiedlicher maximaler Befüllhöhe angepasst werden, sodass Über-und Unterfüllungen des Behältnisse 7 zuverlässig vermieden werden. Ebenso können dem Benutzer vom Getränkebereiter 1 je nachdem, welches Behältnis 7 unter dem Getränkeauslass 3 angeordnet wurde, geeignete Getränkevorschläge unterbreitet werden.

### Bezugszeichenliste

- 1: Getränkebereiter
- 2: Gehäuse
- 3: Getränkeauslass
- 4: Pfeil
- 5, 5', 5": Lasermodul
- 6: Laserstrahlung
- 7: Behältnis
- 8: Behältnis-Aufnahme
- 9: Pfeil
- 10: Abwasserschale
- 11: Abwasser
- 12: Getränk
- 13: Behältnis-Wand
- 14: Behältnis-Boden
- 15: Laserauslass
- 16: Reflektor
- 17: Pfeil

- D: Drehachse
- E: Strahlebene
- V: Vertikalrichtung
- h: Behältnis-Höhe
- b: Boden-Höhe
- d: Durchmesser
- f: Füllstand
- x: Strahlrichtung

## Patentansprüche

1. Getränkebereiter (1), insbesondere Kaffeevollautomat,
- mit einem Getränkeauslass (3) zur Ausgabe des vom Getränkebereiter (1) zubereiteten Getränks (12) in ein Behältnis (7),
- mit einer Behältnis-Aufnahme (8) zum Aufnehmen des Behältnisses (7) zumindest während des Befüll-Vorgangs mit dem aus dem Getränkeauslass (3) ausgegebenen Getränk (12),
- mit einem Lasermodul (5) zum Emittieren von Laserstrahlung (6), mittels welchem durch Detektion und Auswertung der am Behältnis (7) reflektierten Laserstrahlung (6) zumindest ein Parameter betreffend das in der Behältnis-Aufnahme (8) angeordnete Behältnis (7) bestimmbar ist, **dadurch gekennzeichnet, dass**
das Lasermodul (5) zur Erzeugung von Laserstrahlung (6) mit einem zweidimensionalen Strahlprofil um eine vorbestimmte Drehachse (D) drehbar ausgebildet ist, oder dass
der Getränkebereiter (1) zur Erzeugung von Laserstrahlung (6) mit einem zweidimensionalen Strahlprofil einen um eine vorbestimmte Drehachse (D) drehbar ausgebildeten Reflektor (16) zum Reflektieren der vom Lasermodul (5) emittierten Laserstrahlung (6) umfasst.

2. Getränkebereiter nach Anspruch 1, **dadurch gekennzeichnet, dass** der zumindest eine Parameter ein die geometrische Formgebung des Behältnisses (7) beschreibender Parameter ist.

3. Getränkebereiter nach Anspruch 1 oder 2, **dadurch gekennzeichnet, dass** der zumindest eine Parameter eine Höhe (h) des Behältnisses (7) und/oder ein Durchmesser (d) des Behältnisses (7) ist.

4. Getränkebereiter nach einem der Ansprüche 1 bis 3, **dadurch gekennzeichnet, dass** der zumindest eine Parameter eine Bodenhöhe (b) des Behältnis-Bodens (14) des Behältnisses (7) ist.

5. Getränkebereiter nach einem der vorhergehenden Ansprüche, **dadurch gekennzeichnet, dass** der zumindest eine Parameter ein Füllstand (f) des mit dem Getränk (12) befüllten Behältnisses (7) ist.

6. Getränkebereiter nach einem der vorhergehenden Ansprüche, **dadurch gekennzeichnet, dass** der zumindest eine Parameter die Position des Behältnisses (7) relativ zum Getränkebereiter (1), insbesondere relativ zum Getränkeauslass (3), ist.

7. Getränkebereiter nach einem der vorhergehenden Ansprüche, **dadurch gekennzeichnet, dass** das zumindest eine Lasermodul (5) einen Laserauslass (15) zum Emittieren von Laserstrahlung (6) entlang einer Strahlrichtung (x) und einen Detektor zum Detektieren der emittierten Laserstrahlung (6) umfasst, wobei das Lasermodul (5) zur Entfernungsmessung eingerichtet ist.

8. Getränkebereiter nach einem der vorhergehenden Ansprüche, **dadurch gekennzeichnet, dass** das zumindest eine Lasermodul (5) translatorisch ortsfest und um die vorbestimmte Drehachse (D) drehbar mit einem Gehäuse (2) des Getränkebereiters (1) verbunden ist.

9. Getränkebereiter nach einem der vorhergehenden Ansprüche, **dadurch gekennzeichnet, dass** der Reflektor (16) als Spiegel ausgebildet ist, der zum Drehen um die Drehachse (D) mit einem piezoelektrischen Antrieb antriebsverbunden ist.

10. Getränkebereiter nach einem der vorhergehenden Ansprüche, **dadurch gekennzeichnet, dass** der Getränkeauslass (3) relativ zur Behältnis-Aufnahme (8) höhenverstellbar ausgebildet ist und das zumindest eine Lasermodul (5) translatorisch ortsfest und um die vorbestimmte Drehachse (D) drehbar mit dem Getränkeauslass (3) verbunden ist.

11. Getränkebereiter nach einem der vorhergehenden Ansprüche, **dadurch gekennzeichnet, dass** ein erstes und zumindest ein zweites Lasermodul (5; 5'; 5") vorgesehen sind, wobei das zweite Lasermodul (5") relativ zum ersten Lasermodul (5; 5') translatorisch verstellbar ausgebildet ist.

12. Getränkebereiter nach einem der vorhergehenden Ansprüche, **dadurch gekennzeichnet, dass** das zumindest eine Lasermodul (5) entlang einer Vertikalrichtung (V) des Gehäuses (2) des Getränkebereiters (1) oberhalb der Behältnis-Aufnahme (8) und/oder oberhalb des Getränkeauslasses (3) angeordnet ist.

## Claims

1. Beverage maker (1), in particular fully automatic coffee machine,
- with a beverage spout (3) for dispensing into a receptacle (7) the beverage (12) prepared by the beverage maker (1),
- with a receptacle support (8) for supporting the receptacle (7) at least during the process of filling with the beverage (12) dispensed from the beverage spout (3),
- with a laser module (5) for emitting laser radiation (6), by means of which laser module at least one parameter relating to the receptacle (7) arranged in the receptacle support (8) can be determined by means of detection and evaluation of the laser radiation (6) reflected on the receptacle (7), **characterised in that**
the laser module (5), in order to generate laser radiation (6) with a two-dimensional beam profile, is embodied to be rotatable around a pre-determined axis of rotation (D), or that
the beverage maker (1), in order to generate laser radiation (6) with a two-dimensional beam profile, comprises a reflector (16), embodied to be rotatable around a pre-determined axis of rotation (D), for reflecting the laser radiation (6) emitted by the laser module (5).

2. Beverage maker according to claim 1, **characterised in that** the at least one parameter is a parameter describing the geometric shape of the receptacle (7).

3. Beverage maker according to claim 1 or 2, **characterised in that** the at least one parameter is a height (h) of the receptacle (7) and/or a diameter (d) of the receptacle (7).

4. Beverage maker according to one of claims 1 to 3, **characterised in that** the at least one parameter is a base height (b) of the receptacle base (14) of the receptacle (7).

5. Beverage maker according to one of the preceding claims, **characterised in that** the at least one parameter is a fill level (f) of the receptacle (7) filled with the beverage (12).

6. Beverage maker according to one of the preceding claims, **characterised in that** the at least one parameter is the position of the receptacle (7) relative to the beverage maker (1), in particular relative to the beverage spout (3).

7. Beverage maker according to one of the preceding claims, **characterised in that** the at least one laser module (5) comprises a laser output (15) for emitting laser radiation (6) along a beam direction (x) and a detector for detecting the emitted laser radiation (6), wherein the laser module (5) is configured for distance measurement.

8. Beverage maker according to one of the preceding claims, **characterised in that** the at least one laser module (5) is connected to a housing (2) of the beverage maker (1) so as to be translationally fixed and rotatable around the pre-determined axis of rotation (D).

9. Beverage maker according to one of the preceding claims, **characterised in that** the reflector (16) is embodied as a mirror that is connected to, so as to be actuated by, a piezoelectric actuator in order to rotate around the axis of rotation (D).

10. Beverage maker according to one of the preceding claims, **characterised in that** the beverage spout (3) is embodied to be height-adjustable relative to the receptacle support (8) and the at least one laser module (5) is connected to the beverage spout (3) so as to be translationally fixed and rotatable around the pre-determined axis of rotation (D).

11. Beverage maker according to one of the preceding claims, **characterised in that** a first and at least one second laser module (5; 5'; 5") are provided, wherein the second laser module (5") is embodied so as to be translationally adjustable relative to the first laser module (5; 5').

12. Beverage maker according to one of the preceding claims, **characterised in that** the at least one laser module (5) is arranged above the receptacle support (8) and/or above the beverage spout (3) along a vertical direction (V) of the housing (2) of the beverage maker (1).

## Revendications

1. Dispositif de préparation de boissons (1), en particulier machine à café entièrement automatique,
- avec un déversoir pour les boissons (3) pour la sortie de la boisson (12) préparée dans le dispositif de préparation de boissons (1), dans un récipient (7),
- avec un logement de récipient (8) pour le logement du récipient (7) au moins pendant le processus de remplissage avec la boisson (12) sortant du déversoir pour les boissons (3),
- avec un module laser (5) pour l'émission d'un rayonnement laser (6), au moyen duquel, par détection et analyse du rayonnement laser (6) réfléchi sur le récipient (7), au moins un paramètre relatif au récipient (7) disposé dans le logement de récipient (8), peut être déterminé,
**caractérisé en ce que** le module laser (5) est réalisé rotatif autour d'un axe rotatif prédéterminé (D) pour la production d'un rayonnement laser (6) avec un profilé en acier bidimensionnel, ou **en ce que**
le dispositif de préparation de boissons (1) comprend, pour la production d'un rayonnement laser (6) avec un profilé en acier bidimensionnel, un réflecteur (16) réalisé rotatif autour d'un axe de rotation (D) prédéterminé, pour la réflexion du rayonnement laser (6) émis par le module laser (5).

2. Dispositif de préparation de boissons selon la revendication 1, **caractérisé en ce que** le au moins un paramètre est un paramètre décrivant la forme géométrique du récipient (7).

3. Dispositif de préparation de boissons selon la revendication 1 ou 2, **caractérisé en ce que** le au moins un paramètre est une hauteur (h) du récipient (7) et/ou un diamètre (d) du récipient (7).

4. Dispositif de préparation de boissons selon l'une des revendications 1 à 3, **caractérisé en ce que** le au moins un paramètre est un niveau du fond (b) du fond de récipient (14) du récipient (7).

5. Dispositif de préparation de boissons selon l'une des revendications précédentes, **caractérisé en ce que** le au moins un paramètre est un niveau (f) du récipient (7) rempli avec la boisson (12).

6. Dispositif de préparation de boissons selon l'une des revendications précédentes, **caractérisé en ce que** le au moins un paramètre est la position du récipient (7) par rapport au dispositif de préparation de boissons (1), en particulier par rapport au déversoir pour les boissons (3).

7. Dispositif de préparation de boissons selon l'une des revendications précédentes, **caractérisé en ce que** le au moins un module laser (5) comprend une sortie laser (15) pour l'émission d'un rayonnement laser (6) sur un sens de rayon (x) et un détecteur pour la détection du rayonnement laser (6) émis, le module laser (5) étant prévu pour la mesure de l'éloignement.

8. Dispositif de préparation de boissons selon l'une des revendications précédentes, **caractérisé en ce que** le au moins un module laser (5) est raccordé fixe par translation et rotatif autour de l'axe de rotation (D) prédéterminé au corps (2) du dispositif de préparation de boissons (1).

9. Dispositif de préparation de boissons selon l'une des revendications précédentes, **caractérisé en ce que** le réflecteur (16) est réalisé comme un miroir, lequel est raccordé par entraînement à un entraînement piézoélectrique pour la rotation autour de l'axe rotatif (D).

10. Dispositif de préparation de boissons selon l'une des revendications précédentes, **caractérisé en ce que** le déversoir pour les boissons (3) est réalisé réglable en hauteur par rapport au logement de récipient (8) et le au moins un module laser (5) est raccordé fixe par translation et rotatif autour de l'axe de rotation (D) prédéterminé, au déversoir pour les boissons (3).

11. Dispositif de préparation de boissons selon l'une des revendications précédentes, **caractérisé en ce qu'**un premier et au moins un deuxième module laser (5; 5'; 5") sont prévus, le deuxième module laser (5") étant réalisé réglable en translation par rapport au premier module laser (5, 5').

12. Dispositif de préparation de boissons selon l'une des revendications précédentes, **caractérisé en ce que** le au moins un module laser (5) est disposé sur un sens vertical (V) du corps (2) du dispositif de préparation de boissons (1) au-dessus du logement de récipient (8) et/ou au-dessus du déversoir pour les boissons (3).
